# EUROPÄISCHE PATENTANMELDUNG

(11) **EP 1 347 216 A2**
(43) Veröffentlichungstag der Anmeldung: **24.09.2003**
(21) Anmeldenummer: 03006004.0
(22) Anmeldetag: 18.03.2003
(51) Int. Cl.: F16H 63/32

(54) **Schaltgabel für Getriebe, insbesondere Kfz-Getriebe und Herstellungsverfahren für eine Schaltgabel**

(30) Priorität: 19.03.2002 DE 10212245; 20.12.2002 DE 10261209
(71) Anmelder: ISE Industries GmbH, 58455 Witten (DE)
(72) Erfinder: Völpert, Gerhard, 58452 Witten (DE); Greff, Hartmut, 44623 Herne (DE); Gawronski, Lucian, 45665 Recklinghausen (DE)
(74) Vertreter: Patentanwälte Wenzel & Kalkoff

(57) **Zusammenfassung**

Die Erfindung betrifft eine Schaltgabel (1) für Getriebe, insbesondere Kfz-Getriebe,
- zum Verschieben einer zwischen Zahnrädern angeordneten und am Umfang mit einer Nut versehenen Schiebemuffe zum Wechseln von Getriebestufen,
- mit einem Gabelrücken (2),
- von dem zwei Gabelschenkel (3a,3b) im Abstand voneinander ausgehen,
- mit einer Schwenklageraufnahme (5a,5b) insbesondere für einen Lagerzapfen im Bereich des Gabelrückens für eine schwenkbare Lagerung der Schaltgabel im Getriebegehäuse und
- mit einem Betätigungshebel (4) zum Betätigen der Schaltgabel, der sich von dem Bereich des Gabelrückens her neben einem der Gabelschenkel erstreckt,
wobei die Schaltgabel, nämlich der Gabelrücken (2), die beiden Gabelschenkel (3a,3b), die Schwenklageraufnahme (5a,5b) und der Betätigungshebel (4) einteilig aus Stahlblech gebildet sind. Außerdem wird ein Verfahren zum Herstellen von einteilig aus Stahlblech bestehenden Schaltgabeln angegeben.

## Beschreibung

Die Erfindung betrifft eine Schaltgabel für Getriebe, insbesondereKfz-Getriebe,
- zum Verschieben einer zwischen Zahnrädern angeordneten und am Umfang mit einer Nut versehenen Schiebemuffe zum Wechseln von Getriebestufen,
- mit einem Gabelrücken,
- von dem zwei Gabelschenkel im Abstand voneinander ausgehen,
- mit einer Schwenklageraufnahme insbesondere für einen Lagerzapfen im Bereich des Gabelrückens für eine schwenkbare Lagerung der Schaltgabel im Getriebegehäuse und
- mit einem Betätigungshebel zum Betätigen der Schaltgabel, der sich von dem Bereich des Gabelrückens her neben einem der Gabelschenkel erstreckt,
sowie ein Verfahren zum Herstellen einer Schaltgabel für Getriebe, insbesondere Kfz-Getriebe.

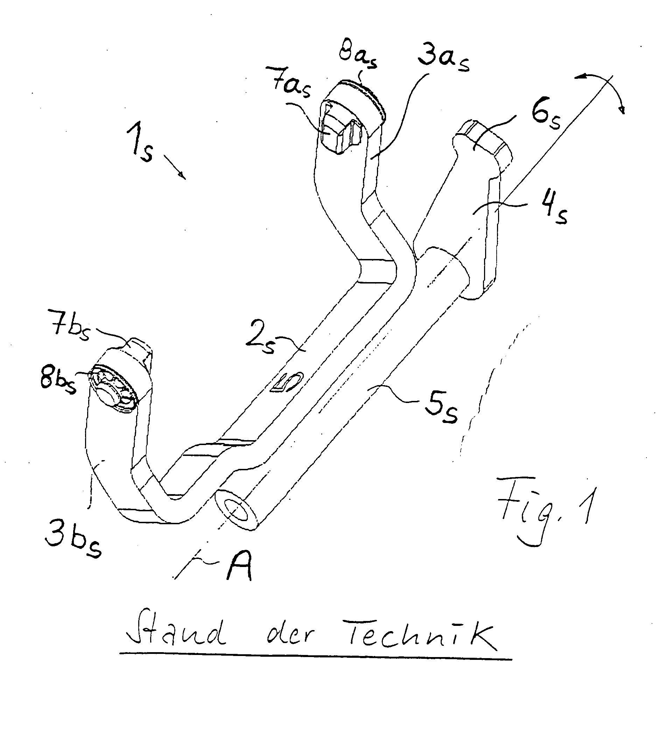

Eine bekannte Schaltgabel, von der die Erfindung ausgeht, ist in Fig. 1 dargestellt.

Die bekannte Schaltgabel besteht im wesentlichen aus drei Bauteilen, die gesondert hergestellt, bearbeitet und anschließend zu der dargestellten Schaltgabel miteinander verbunden werden, vorzugsweise durch Schweißen. Eins dieser Bauteile ist die im Prinzip U-förmige Gabel selbst mit den beiden parallel im Abstand voneinander angeordneten Gabelschenkeln, die durch den Gabelrücken miteinander verbunden sind. Die Gabel wird als Stanz- und Preßteil hergestellt. Auf dem Gabelrücken ist ein rohrförmiges Lagerbauteil festgeschweißt, durch das sich in der eingebauten Lage der Schaltgabel ein Lagerzapfen erstreckt, dessen Enden im Getriebegehäuse befestigt sind. Das rohrförmige Bauteil ist folglich eine Schwenklageraufnahme für diesen Lagerzapfen, um den die Schaltgabel um einen gewissen Winkel in eine Richtung hin- und in die Null-Lage zurückverschwenkt werden kann, und die gleiche Schwenkbewegung ist zur anderen Richtung hin möglich, je nachdem, welcher Wechsel der Getriebestufen gewünscht wird.

An einem der Enden des rohrförmigen Lagerbauteils ist der Betätigungshebel durch Anschweißen befestigt, der zum Betätigen, also zum Verschwenken der Schaltgabel dient, und der seinerseits über einen an seinem freien Ende ausgebildeten Kopf von einer Schaltstange erfaßt wird, die beim Schalten des Getriebes eine lineare Bewegung in der einen und/oder der anderen Richtung ausführt und dabei den Kopf des Betätigungshebels mitnimmt.

Der Betätigungshebel ist als Blechstanzteil hergestellt, und das rohrförmige Lagerbauteil wird aus einem geeigneten Stahlrohr-Vormaterial gefertigt.

Die Gabelschenkel weisen jeweils an ihrem freien Ende eine Aufnahmebohrung für eine drehbare Lagerung von Segmenten auf, die zum Eingriff in eine Nut der Schaltmuffe bestimmt sind, die beim Schalten hin- und/oder herbewegt wird.

Das freie Ende des rohrförmigen Lagerbauteils endet im Abstand vor dem benachbarten Gabelschenkel, und dieser weist am Übergang zum Gabelrücken eine Stufe auf, so daß ein Freiraum für einen Teil der Getriebewandung entsteht, in dem ein Ende des Lagerzapfens befestigt ist.

Die gesonderte Herstellung und Bearbeitung der drei Bauteile, die die bekannte Schaltgabel bilden, und insbesondere deren Verbindung durch Verschweißen, erfordert einen entsprechend hohen Fertigungsaufwand, zumal die Funktionsmaße der Schaltgabel, beispielsweise der Abstand zwischen dem Kopf des Betätigungshebels und dem Segment des benachbarten Gabelschenkels, nur geringe Toleranzen gestattet. Das genaue Einhalten der Funktionsmaße wird vor allem auch durch die Schweißverbindungen der drei Bauteile erschwert, weil die genaue gegenseitige Zuordnung der drei Bauteile während der Schweißarbeiten gefährdet ist. Schließlich wird von der Schaltgabel, nämlich von den Gabelschenkeln ebenso wie von dem Betätigungshebel für die Ausführung der Schaltbewegungen eine hohe Steifigkeit verlangt, auch und insbesondere bezüglich der Schweißverbindungen, zumal die Schaltgabel im Hinblick auf die hohe Anzahl an Schaltvorgängen, die in einem Kfz-Getriebe stattfinden, entsprechend hoch belastet ist und deshalb eine entsprechend hohe Lebensdauer aufweisen muß.

Die Aufgabe der Erfindung besteht darin, für eine Schaltgabel dieser Art mit den gleichen Funktionen im Getriebe selbst eine Ausbildung der Schaltgabel und ein Herstellungsverfahren hierfür zu schaffen, mit denen sich der Herstellungsaufwand der Schaltgabel deutlich senken läßt, wobei die Funktionen der Schaltgabel ebenso wie deren Lebensdauer unverändert beizubehalten und ggfs. noch zu verbessern sind.

Erfindungsgemäß wird diese Aufgabe dadurch gelöst, daß die Schaltgabel, nämlich der Gabelrücken, die beiden Gabelschenkel, die Schwenklageraufnahme und der Betätigungshebel einteilig aus Stahlblech gebildet sind.

Damit entfällt eine gesonderte Herstellung mehrerer Bauteile wie bei der bisher bekannten Schaltgabel, und die einteilige Herstellung der Schaltgabel macht die Schweißarbeiten zum Verbinden der Bauteile der bisher bekannten Schaltgabel überflüssig, so daß diese Verbindungen, die eine Schwachstelle bilden können, gänzlich vermieden werden. Durch die einteilige Ausbildung der Schaltgabel aus Stahlblech wird der Herstellungsaufwand der Schaltgabel deutlich gesenkt.

Vorzugsweise werden nicht nur die beiden Gabelschenkel sondern auch der Betätigungshebel als von dem Gabelrücken abgebogene Teile ausgebildet. In Anspruch 3 sind entsprechend einer Weiterbildung der Erfindung drei verschiedene sich jeweils senkrecht zur Schwenkachse der Schaltgabel erstreckende Ebenen angegebenen, in denen die Gabelschenkel und der Betätigungshebel, die von dem Gabelrücken ausgehen, verlaufen.

Für die Ausbildung der Schwenklageraufnahme für den Lagerzapfen eröffnet die Erfindung eine Reihe von Möglichkeiten. Auf jeden Fall verzichtet die Erfindung auf ein röhrchenförmiges Lagerbauteil, und statt dessen besteht die Schwenklageraufnahme für den Lagerzapfen der Schaltgabel vorzugsweise aus zwei im Abstand voneinander angeordneten Lagerbohrungen in von dem Gabelrücken unmittelbar abgebogenen Bauteilen wie dem Zwischenabschnitt oder dem abgewinkelten Abschnitt oder in von solchen abgebogenen Bauteilen abgewinkelten Bauteilabschnitten, wie abgewinkelten Laschen oder Ösen, die sich von dem Zwischenabschnitt bzw. dem abgewinkelten Abschnitt aus erstrecken (Anspruch 4). Durch diese Ausbildung ergibt sich zweifellos eine erhebliche Vereinfachung der Herstellung in Biegetechnik gegenüber der bisherigen Bauart, wo noch an einem überstehenden Ende des röhrchenförmigen Bauteils der Betätigungshebel angebracht ist, der nun erfindungsgemäß vorzugsweise von dem Gabelrücken direkt oder mittelbar abgewinkelt, jedenfalls mit dem Gabelrücken einteilig verbunden ist.

Wie Anspruch 5 zeigt, ergeben sich auch keine Schwierigkeiten bei der einteiligen Ausführung der Schaltgabel für die notwendige Versetzung der Lagerbohrungen durch die in diesem Anspruch angegebene bevorzugte Gestaltung, die auch ohne weiteres zuläßt, eine Lage der im Bereich des Betätigungshebels liegenden Lagerbohrung in oder nahe an der Ebene dieses Betätigungshebels zu erreichen.

Nach einer erfindungsgemäßen Weiterbildung lassen sich auch die Aufnahmebohrungen für eine drehbare Lagerung der Segmente in den freien Enden der Gabelschenkel herstellen, die zum Eingriff in die Nut der Schaltmuffe bestimmt sind (Anspruch 6).

Die erfindungsgemäße Schaltgabel weist zweckmäßig auch einen Kopf wie die bisher übliche Bauart in exakt der gleichen Position auf, an dem in der Einbaulage der Schaltgabel im Getriebe eine zum Schalten linear hin- und herbewegbare Schaltschiene angreift, um durch Bewegen des Kopfes eine entsprechende Schwenkbewegung der Schaltgabel zum Schalten des Getriebes zu bewirken. Wegen der relativ hohen Beanspruchung des Kopfes des Betätigungshebels ist dieser gehärtet, insbesondere induktiv gehärtet.

Nach Anspruch 7 besteht der Gabelrücken vorzugsweise aus einem länglichen Blechabschnitt mit im Hinblick auf die Beanspruchung und verlangte Festigkeit des Gabelrückens ausreichender Breite, wobei von den Endbereichen des Gabelrückens, wie Ausführungsbeispiele noch zeigen, die Gabelschenkel und der Betätigungshebel entweder unmittelbar oder aber mittelbar über einen Zwischenabschnitt abgewinkelt sind.

Für die Ausbildung des Gabelrückens ergibt sich insofern eine erhebliche Vereinfachung, als bei der bisher bekannten Ausführung der Schaltgabel der Gabelrücken noch das röhrchenförmige Lagerbauteil mitumfaßt, das nun vollends entfällt.

Bei einer ersten bevorzugten Ausführungsform der Schaltgabel ist gemäß Anspruch 8 vorgesehen, daß auf der Seite des Betätigungshebels von dem Gabelrücken zweckmäßig ein Zwischenabschnitt abgewinkelt ist, von dem nebeneinander der Betätigungshebel und der dort gelegene Gabelschenkel ausgehen. So wird in einfacher Weise mittels eines Zwischenabschnitts erreicht, daß sowohl der Betätigungshebel als auch der in einer gegenüber dem Betätigungshebel versetzt angeordneten Ebene befindliche Gabelschenkel, der sich unmittelbar neben dem Betätigungshebel befindet, mittelbar gemeinsam von dem Gabelrücken abgewinkelt sind.

Nach Anspruch 9 wird die notwendige Anordnung des Gabelschenkels in einer anderen gegenüber dem Betätigungshebel versetzten Ebene zweckmäßig durch eine zweifache Abwinkelung bzw. Abstufung des Gabelschenkels in seinem Ausgangsbereich an dem Zwischenabschnitt hergestellt.

Auch der andere von dem Betätigungshebel entfernt gelegene Gabelschenkel weist zweckmäßig in einfacher Weise eine zweifach abgewinkelte Stufe für die dort in der Gebrauchslage der Schaltgabel gelegene Lagerzapfen-Aufnahme der Getriebewand auf.

Eine erhebliche Vereinfachung gegenüber der bisherigen Bauart der Schaltgabel ergibt sich gemäß Anspruch 10 dadurch, daß sich die Lagerbohrungen für den Lagerzapfen unmittelbar in dem Zwischenabschnitt bzw. in der abgewinkelten Stufe befinden. Ein gesondertes Bauteil für die Schwenklageraufnahme entfällt somit.

Bei einer zweiten bevorzugten Ausführungsform der Erfindung ist vorgesehen, daß sich an den Gabelrücken auf der Seite des Betätigungshebels ein Arm anschließt, der sich über die Ebene des auf dieser Seite gelegenen Gabelschenkels hinauserstreckt und von dem der Betätigungshebel abgewinkelt ist. Durch diese Abwandlung wird deutlich, daß sich die einteilige Verbindung des Gabelrückens und des Betätigungshebels ohne weiteres auch auf andere Weise als die Ausbildung eines Zwischenabschnitts verwirklichen läßt.

Bei dieser zweiten bevorzugten Ausführungsform der Schaltgabel geht gemäß Anspruch 12 zweckmäßig von dem Kernabschnitt des Gabelrückens ein Abschnitt aus, an dem im Bereich seiner Enden die Lagerbohrungen in dem vorgegebenen Abstand unmittelbar ausgebildet sind. Dieser Abschnitt ist vom Kernabschnitt des Gabelrückens vorzugsweise abgewinkelt, und die Lagerbohrungen befinden sich gemäß Anspruch 13 zweckmäßig in an beiden freien Enden abgewinkelten Laschen, wodurch sich ebenfalls eine einfache Herstellung ergibt.

Eine sehr wesentliche Weiterbildung der Erfindung ergibt sich gemäß Anspruch 14 dadurch, daß die einteilige Schaltgabel mit ihren wesentlichen Funktionsteilen, nämlich dem Gabelrücken, den Gabelschenkeln, dem Betätigungshebel und den Lagerbohrungen, als Konturstanzteil aus einem länglichen sowie ebenen Blechabschnitt hergestellt und die vorgenannten Funktionsteile mittels Biegewerkzeugen in ihre vorbestimmte Position gebogen sind. Diese vor allem für Großserien mit relativ geringem Herstellungsaufwand verbundene Fertigung läßt sich sowohl auf die erste als auch auf die bevorzugte zweite Ausführungsform der Schaltgabel, wie vorstehend angegeben, anwenden.

Es ist außerdem möglich, die Schaltgabel als ebenen Blechrohling mit ihrer Längserstrekkung quer auf einem entsprechend breiten Stahlblech Längsstreifen anzuordnen, wodurch die Herstellung vereinfacht wird.

Bei einer dritten bevorzugten Ausführungsform der Schaltgabel erstrecken sich gemäß Anspruch 15 der Gabelrücken und die beiden hiervon ausgehenden Gabelschenkel im wesentlichen in der Blechebene, wobei auch diese Schaltgabelausführung biegeziehtechnisch aus einem flachen Stahlblechstreifen geformt wird. Das Widerstandsmoment des nun "hochgestellten" Gabelrückens nimmt gegenüber der liegenden Anordnung erheblich zu. Insgesamt wird mit dieser Formgebung die Festigkeit der Schaltgabel deutlich gesteigert.

Ähnlich wie bei dem zweiten bevorzugten Ausführungsbeispiel erstrecken sich hier gemäß Anspruch 16 die Lagerbohrungen für die Schwenklagerung der Gabel in von dem Gabelrükken abgewinkelten Abschnitten. Der Betätigungshebel geht vorzugsweise von einem von dem Gabelrücken abgewinkelten Abschnitt aus und erhält damit die seiner Bewegungsebene entsprechende Position.

Der erhöhten Festigkeit und gleichzeitig einer Vereinfachung der Fertigung dient eine weitere Maßnahme, wonach der abgewinkelte Abschnitt, von dem der Betätigungshebel ausgeht, einteilig in den abgewinkelten Abschnitt übergeht, in dem eine der Lagerbohrungen für die Schwenklagerung ausgebildet ist.

Da sich (vgl. Anspruch 15) die Gabelschenkel bei dieser Ausführungsform im wesentlichen in der Blechebene erstrecken, werden die freien Enden der Gabelschenkel zur Bildung von Aufnahmebohrungen für eine drehbare Lagerung von Segmenten vorzugsweise gewickelt bzw. eingerollt (Anspruch 17). Die entstehende Rolle bzw. der Wickel kann durch Schweißen zu einer geschlossenen Öse geformt werden. Auf diese einfache Weise verbindet man die Ausformung hochfester Gabelschenkel mit der notwendigen Ausbildung von Aufnahmebohrungen für die drehbare Segmentlagerung.

Alternativ kann man die freien Enden der Gabelschenkel auch um 90° verdrehen, wobei die Aufnahmebolzen für die drehbare Lagerung der Segmente senkrecht zur Blechebene, also wie üblich, ausgeführt sind, so daß sich auch in diesem Fall durch die Aufnahmebohrungen die gemeinsame Achse für die drehbare Lagerung der Segmente erstreckt.

Ebenfalls aus Festigkeitsgründen ist vorzugsweise vorgesehen, daß die beiden Gabelschenkel an der Innenseite vom Gabelrücken her jeweils bogenförmig ansteigen (Anspruch 18). Auf diese Weise läßt sich bei dieser dritten bevorzugten Ausführungsform der erfindungsgemäßen Schaltgabel der Vorteil, daß die Gabelschenkel ebenso wie der Gabelrücken im wesentlichen in der Blechebene liegen, für eine nachhaltige Verstärkung der Gabelschenkel durch eine entsprechende Formgebung ausnutzen, soweit hierfür im Getriebe freier Raum zur Verfügung steht. Ebenso ist ein schräger Anstieg in Betracht zu ziehen, aber die Bogenform nutzt den zur Verfügung stehenden Raum besser aus.

Der von dem Betätigungshebel entfernt liegende Gabelschenkel kann zur Erhöhung seiner Festigkeit eine abgewinkelte Wange aufweisen, die längs der Abwinkelungskante bogenförmig verlaufen kann (Anspruch 19). Die Wange erhöht das Widerstandsmoment und die Steifigkeit des Gabelschenkels erheblich. Entsprechend der Form des Gabelschenkels verjüngt sich die Wange vorzugsweise nach oben zum freien Ende des Gabelschenkels hin.

Ebenfalls der Erhöhung der Festigkeit der Schaltgabel dient eine weitere zweckmäßige Maßnahme, wonach die Wange in den abgewinkelten Abschnitt übergeht, in dem sich die auf dieser Seite gelegene Lagerbohrung befindet. Denn auf diese Weise bilden die drei aufeinander zulaufenden Blechabschnitte eine kompakte durchgehende und geschlossene Wandung.

Ebenfalls aus Festigkeitsgründen ist es zweckmäßig, daß der nahe an dem Betätigungshebel gelegene Gabelschenkel auch an seiner Außenseite von oben nach unten schräg oder bogenförmig zunehmend verläuft.

Der Gabelrücken wird vorzugsweise durch eine Sicke verstärkt (Anspruch 20). Diese erstreckt sich zweckmäßigerweise bis in den Ansatzbereich des nahe an dem Betätigungshebel gelegenen Gabelschenkels. Hierdurch nimmt das Widerstandsmoment durch eine einfache preßtechnische Maßnahme weiter zu (Anspruch 21).

Nach einer Weiterbildung ist vorgesehen, daß sich die Gabelschenkel von dem Gabelrücken ausgehend leicht schräg und/oder bogenförmig erstrecken, wodurch die Achse der Aufnahmebohrungen für die Segmente die ihr zugeordnete Position gegenüber dem Betätigungshebel und der Schwenkachse A erhält.

Bei den bevorzugten Ausführungsformen der erfindungsgemäßen Schaltgabel besteht diese aus einem Stahlblech der Güte C 35. Diese Angabe entspricht einem bevorzugten Ausführungsbeispiel ebenso wie die weitere beispielhafte Angabe, daß die Schaltgabel aus einem Stahlblech mit einer Dicke im Bereich von 4-8 mm, vorzugsweise von 6 mm oder auch 5,5 mm besteht.

Ein erfindungsgemäßes Verfahren zum Herstellen einer Schaltgabel für Getriebe, insbesondere Kfz-Getriebe, und zwar der eingangs der Beschreibung genannten Art, ist dadurch gekennzeichnet, daß die Schaltgabel, nämlich der Gabelrücken, die beiden Gabelschenkel, die Schwenklageraufnahme und der Betätigungshebel einteilig aus Stahlblech hergestellt werden (Anspruch 22).

Angesichts des bisher bekannten Verfahrens für die bekannte Schaltgabel unterscheidet sich das erfindungsgemäße Herstellungsverfahren grundlegend gegenüber der bisherigen Technik. Denn es werden nicht mehr drei Bauteile gesondert hergestellt und anschließend durch Verschweißen miteinander verbunden, sondern die vorgenannten Teile der Schaltgabel werden nun erfindungsgemäß aus einem einzigen Stahlblech-Zuschnitt als ein einziges Teil hergestellt, ohne daß irgendwelche Verbindungsarbeiten, wie Schweißarbeiten oder dergleichen erforderlich sind.

Vorzugsweise wird die Schaltgabel mit ihren vorgenannten Teilen in deren vorgegebenen Abmessungen, Formen und relativen Anordnungen durch Konturstanzen vorzugsweise aus ebenem Stahlblech hergestellt.

Zweckmäßig wird hierfür eine Vielzahl von Schaltgabeln aus einem Blechstreifen hergestellt, auf dem die Zuschnitte der Schaltgabeln nebeneinander sowie quer zur Längsrichtung des Blechstreifens - und während der Bearbeitung ohne Trennung von diesem - angeordnet werden. Diese Anordnung hat sich als zweckmäßig erwiesen, auch wenn theoretisch die Längsausrichtung des ebenen Stahlblechzuschnitts einer solchen erfindungsgemäßen Schaltgabel eine Anordnung in Längsrichtung des Blechstreifens zuläßt, indem die Zuschnitte hintereinander auf dem Blechstreifen angeordnet werden.

Vorzugsweise werden zwei Gabelschenkel der Schaltgabel und der Betätigungshebel mittels Biege- und Umformwerkzeugen in einem Kaltumformungsprozeß in ihre vorgegebene Form und Position gebogen und gepreßt.

Grundsätzlich ist die Herstellung einer einteiligen Schaltgabel aus Stahlblech in der Weise möglich, daß beginnend mit einem Konturstanzen bzw. Konturschneiden ein ebener Rohling der Schaltgabel hergestellt und anschließend in geeigneten Biegepressen und anderen Umformwerkzeugen, denen jeweils bestimmte Umformschritte zugeordnet sind, bis zur Fertigstellung der Schaltgabel bearbeitet wird. Nach einer erfindungsgemäßen Weiterbildung ist jedoch vorgesehen (Anspruch 23), daß
- ein praktisch endloser Blechstreifen, vorzugsweise von einem Coil, schrittweise einer Stanz- und Umformeinrichtung zu- und durch diese hindurchgeführt wird und
- entsprechend schrittweise Stationen in der Stanz- und Umformeinrichtung durchläuft,
- in denen im wesentlichen zur gleichen Zeit aufeinanderfolgende (örtlich auf den Blechstreifen bezogen) - je nach Art der Bearbeitung jedoch teilweise auch gleichzeitig erfolgende Bearbeitungsschritte insbesondere Stanzen, Biegen und Pressen vorgenommen werden.

Für diese Art der Herstellung der Schaltgabel, indem ein auf dem Blechstreifen vorgesehener Zuschnitt für einen zunächst ebenen Rohling einer solchen Schaltgabel eine Vielzahl von Stationen durchläuft, wo jeweils bestimmte Bearbeitungsschritte vorgenommen werden, ist es für die mit der Bearbeitung erzielbare Genauigkeit wesentlich, daß der Rohling möglichst lange mit dem Blechstreifen verbunden und damit positioniert bleibt. Hierfür ist erfindungsgemäß vorzuziehen, daß die Konturstanzbearbeitung in einer oder in mehreren der ersten Stationen eines Folgeverbundwerkzeuges zunächst auf das Ausstanzen der wesentlichen Teile der Schaltgabel, nämlich der Gabelschenkel und des Betätigungshebels sowie der Endabschnitte des Gabelrückens, beschränkt bleibt, und das Ausstanzen des Mittelabschnitts des Gabelrückens als Trennschnitt, mit dem die Schaltgabel aus dem Blechstreifen gelöst wird, erst in einer Endstation erfolgt.

Angesichts der Tatsache, daß es sich bei der Gabelherstellung um eine Großserienherstellung handelt, bei der sich jedoch jede hergestellte Schaltgabel durch hohe Genauigkeit ihrer Funktionsmaße auszeichnen muß, hat sich gezeigt, daß folgendes Herstellungsverfahren zu bevorzugen ist:

Es ist vorgesehen, daß eine schrittweise Bearbeitung des einem Folgeverbundwerkzeug als Stanz-, Bohr-, Biege- und Preßeinrichtung zugeführten Blechstreifens in hintereinander angeordneten Stationen vor allem folgende Bearbeitungsschritte umfaßt, nämlich
- Konturstanzen der Endabschnitte des Gabelrückens, der Gabelschenkel, des Betätigungsarms und der Teile für Lagerbohrungen sowie etwaiger Zwischen- und sonstiger Abschnitte oder späteren Stufen in einer oder in mehreren vorzugsweise aufeinanderfolgenden Bearbeitungsstationen
- Biegen von Stufen der Gabelschenkel und eines Wulstes des Betätigungshebels
- 90°-Abbiegen der Gabelschenkel und des Betätigungshebels einschließlich der Stufen unter Bilden eines Zwischenabschnitts
- Herstellen der Lagerbohrungen und der Aufnahmebohrungen
- Durchführen des Trennschnitts durch Ausstanzen des Mittenabschnittes des Gabelrükkens.

Vorzugsweise wird zwischen den einzelnen Bearbeitungsschritten in den Stationen durch Kalibrieren nachgeformt, um ein hohes Maß an Genauigkeit, insbesondere der Funktionsmaße zu erreichen.

Ebenfalls der Genauigkeit dient die weitere bevorzugte Maßnahme, daß zwischen den Bearbeitungsschritten Messungen, insbesondere der Funktionsmaße vorgenommen werden und entsprechende Nachbearbeitungen stattfinden, so daß am Ende des Durchlaufs durch das Folgeverbundwerkzeug die Schaltgabeln jeweils mit hoher Genauigkeit hergestellt sind.

Ausführungsbeispiele der Erfindung werden nachstehend mit Bezug auf die Zeichnungen erläutert. In den Zeichnungen zeigen:
- Fig. 1: eine perspektivische Ansicht einer Schaltgabel nach dem Stand der Technik;
- Fig. 2: eine perspektivische Ansicht einer ersten bevorzugten Ausführungsform der erfindungsgemäßen Schaltgabel;
- Fig. 3: eine perspektivische Ansicht der Schaltgabel wie in Fig. 2, jedoch mit eingesetzten Segmenten an den Enden der Gabelschenkel;
- Fig. 4: eine schematische Darstellung einer bevorzugten Ausführungsform des erfindungsgemäßen Verfahrens zur Herstellung einer Schaltgabel als Draufsicht auf einen Blechstreifen, aus dem in aufeinanderfolgenden Stationen eines Folgeverbundwerkzeuges aus einem fortlaufenden Blechstreifen ein bevorzugtes Ausführungsbeispiel einer Schaltgabel hergestellt wird;
- Fig. 5: eine perspektivische Ansicht einer zweiten bevorzugten Ausführungsform einer erfindungsgemäßen Schaltgabel;
- Fig. 6: eine weitere perspektivische Ansicht der Schaltgabel von Fig. 5 unter einem anderen Blickwinkel;
- Fig. 7: eine perspektivische Ansicht einer dritten bevorzugten Ausführungsform einer erfindungsgemäßen Schaltgabel;
- Fig. 8: eine weitere perspektivische Ansicht der Schaltgabel von Fig. 7 aus einem anderen Blickwinkel;
- Fig. 9: eine perspektivische Rückansicht der Schaltgabel von Fig. 7 und Fig. 8;
- Fig. 10: eine perspektivische Ansicht einer vierten Ausführungsform der erfindungsgemäßen Schaltgabel.

Eine bekannte in Fig. 1 dargestellte Schaltgabel 1ₛ umfaßt im wesentlichen einen Gabelrükken 2ₛ, von dessen Enden Gabelschenkel 3aₛ, 3bₛ abgewinkelt ausgehen, ein auf dem Gabelrücken 2ₛ festgeschweißtes röhrchenförmiges Bauteil 5ₛ als Schwenklageraufnahme und einen am Ende des röhrchenförmigen Bauteils 5ₛ festgeschweißten Betätigungshebel 4ₛ, an dessen freiem Ende sich ein Kopf 6ₛ befindet. In nicht sichtbaren Bohrungen in den freien Enden der Gabelschenkel 3aₛ, 3bₛ sind Segmente 7aₛ, 7bₛ drehbar gelagert.

In der eingebauten Lage der Schaltgabel 1ₛ erstreckt sich ein nicht dargestellter Lagerzapfen durch das röhrchenförmige Bauteil 5ₛ, und die Enden des Lagerzapfens sind im Getriebegehäuse gelagert. Auf diese Weise wird ein Schwenklager gebildet, um dessen Achse A die Schaltgabel 1ₛ um einen vorgegebenen Winkelbetrag in zwei durch einen Doppelpfeil angezeigte Richtungen verschwenkt und wieder in die dargestellte Null-Lage zurückverschwenkt werden kann. Der Betätigungshebel 4ₛ dient zum Verschwenken der Schaltgabel 1ₛ, und hierfür wird der an seinem freien Ende ausgebildete Kopf 6ₛ von einer nicht dargestellten Schaltstange erfaßt, die beim Schalten des Getriebes eine lineare Bewegung in der einen und/oder in der anderen Richtung ausführt und über den Kopf 6ₛ des Betätigungshebels 4ₛ mitnimmt.

Die drehbar in den Gabelschenkeln 3aₛ, 3bₛ gelagerten Segmente 7aₛ, 7bₛ greifen in eine Nut einer nicht dargestellten Schaltmuffe des Getriebes, die von den Gabelschenkeln 3aₛ, 3bₛ über die Segmente 7aₛ, 7bₛ beim Schalten hin- und/oder herbewegt wird, um die für den gewünschten Gang erforderliche Radpaarung herzustellen. Für den Transport der Schaltgabel 1ₛ werden die Segmente 7aₛ, 7bₛ durch Sicherungsringe 8aₛ, 8bₛ in den nicht dargestellten Bohrungen gehalten. Im Getriebe selbst stehen die Segmente 7aₛ, 7bₛ mit der nicht dargestellten Schaltmuffe im Eingriff, so daß sie sich nicht aus den Bohrungen lösen können.

An der in Fig. 2 dargestellten ersten bevorzugten Ausführungsform einer erfindungsgemäßen Schaltgabel 1 sind sämtliche Teile, wie noch ausgeführt wird, einteilig aus Stahlblech vorzugsweise mit einer Güte von C 35 sowie ebenfalls vorzugsweise mit einer Blechdicke von 6 mm hergestellt. Von einem Gabelrücken 2 sind an dessen Enden in zueinander parallelen Ebenen E₁, E₂ verlaufende Gabelschenkel 3a, 3b abgebogen, und zwar an einem Ende des Gabelrückens 2 über einen unmittelbar von dem Gabelrücken abgewinkelten Zwischenabschnitt 9, der sich nach oben verbreitert, und am anderen Ende des Gabelrükkens 2 durch Zwischenschaltung einer Stufe 10, die durch eine doppelte Abwinkelung entsteht. Auch der andere Gabelschenkel 3a weist eine Stufe 11 durch eine doppelte Abwinkelung, die von dem Zwischenabschnitt 9 ausgeht, auf, damit sich der Gabelschenkel 3a in der Ebene E₂ erstreckt, wie die Zeichnung zeigt.

Ebenfalls aus der Zeichnung ist zu entnehmen, daß sich ein Betätigungshebel 4 an einen Wulst 12 an der Oberseite des Zwischenabschnitts 9 in der dargestellten Lage anschließt und sich in einer Ebene E₃ erstreckt, die im wesentlichen parallel zu den Ebenen E₁, E₂ liegt und einen gewissen Abstand von der nächstgelegenen Ebene E₂ hat. Am Ende des Betätigungshebels 4 befindet sich ein Kopf 6, der wegen einer relativ hohen Beanspruchung durch die oben erwähnte Schaltschiene vorzugsweise induktiv gehärtet ist.

In dem abgewinkelten Abschnitt unterhalb der Stufe 10 befindet sich eine Lagerbohrung 5a, der in dem Zwischenabschnitt 9 eine zweite Lagerbohrung 5b gegenüberliegt, die zusammen eine Schwenklageraufnahme für einen nicht dargestellten Lagerzapfen bilden, um dessen Achse A die Schaltgabel 1 eine Schwenkbewegung ausführen kann, wie oben im Zusammenhang mit einer bekannten Ausführung einer Schaltgabel 1ₛ erläutert ist.

Durch die Stufe 10 entsteht der notwendige Raum für einen Getriebewandungsteil zur dortigen Aufnahme des Lagerzapfens.

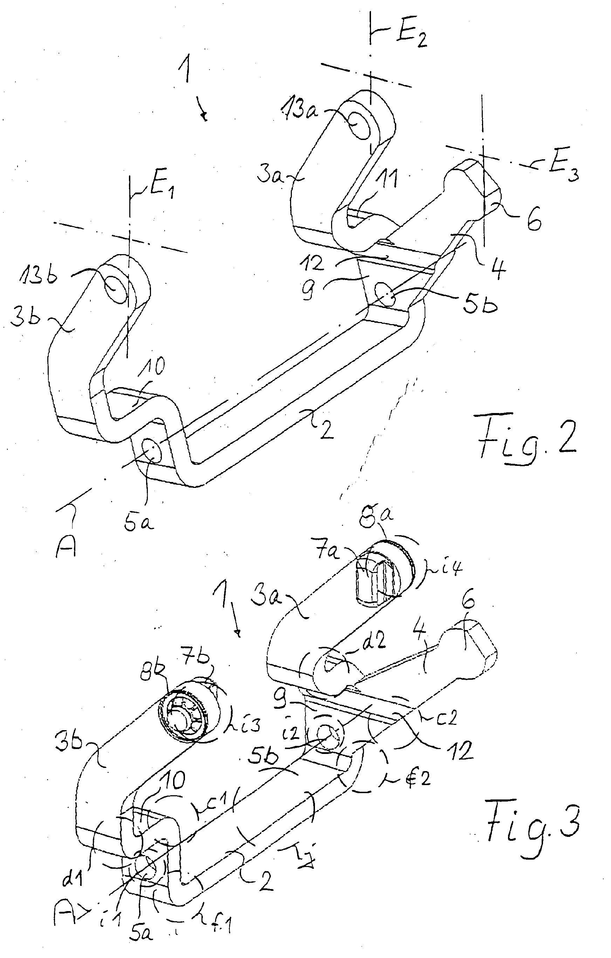

An den freien Enden der Gabelschenkel 3a, 3b befinden sich Aufnahmebohrungen 13a, 13b für Segmente 7a, 7b (vgl. Fig. 3), die wie schon bei der bekannten Ausführung mittels Sicherungsringen 8a, 8b auf dem Transport der Schaltgabel 1 in ihrer Position in den Aufnahmebohrungen 13a, 13b gehalten sind. Den Raum zwischen den Gabelschenkeln 3a, 3b nimmt im Getriebe bekanntlich eine nicht dargestellte Schaltmuffe ein, in deren umlaufende Nut die Segmente 7a, 7b eingreifen.

Die Funktionen der Schaltgabel 1 und ihrer Teile entsprechen der in Fig. 1 dargestellten und vorstehend beschriebenen bekannten Schaltgabel 1ₛ und ihren entsprechenden Teilen, die hinsichtlich ihrer Position und Ausbildung an der bevorzugten Ausführungsform der Schaltgabel in Fig. 2 und 3 ohne weiteres wiederzufinden sind, obwohl sich die erfindungsgemäße Ausführung von der bisher üblichen Schaltgabel-Form erheblich unterscheidet, und zwar ganz primär durch ihre einteilige Herstellung aus Stahlblech. Der Übereinstimmungen wegen kann jedoch auf eine Wiederholung der Erläuterung der Funktionen der Schaltgabel 1 und ihrer Teile im Getriebe verzichtet werden.

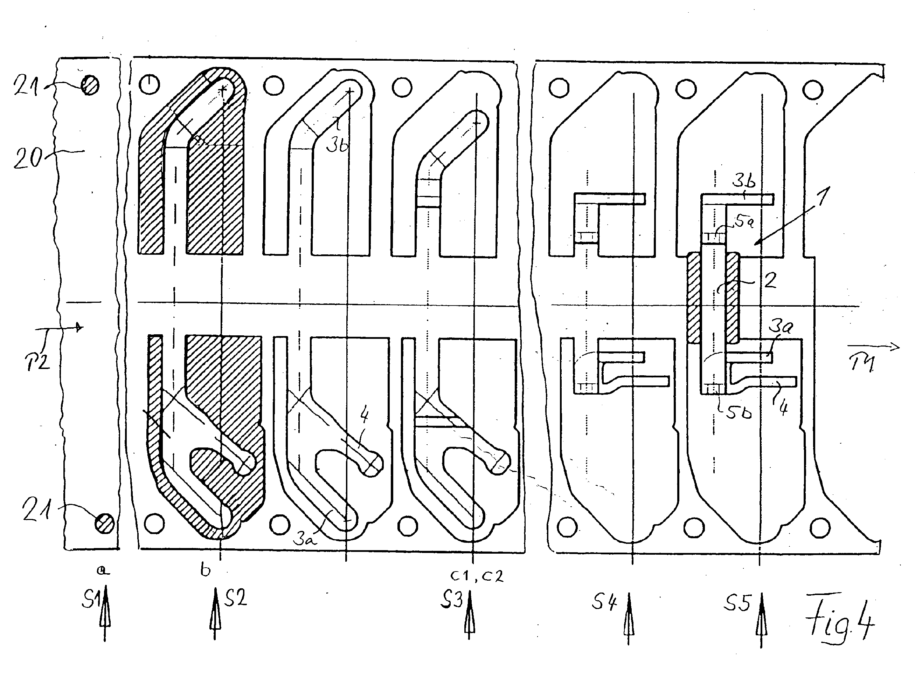

Zur Darstellung eines bevorzugten Herstellungsverfahrens für die Schaltgabel von Fig. 2 wird auf Fig. 3 und 4 Bezug genommen.

In Fig. 4 ist schematisch in Draufsicht ein Blechstreifen 20 mit Unterbrechungen dargestellt, der praktisch endlos von einem Coil in ein Folgeverbundwerkzeug eingezogen und dort in Richtung der Pfeile P₄ und P₂ durch eine Vielzahl von Stationen geführt wird, von denen eine Auswahl S₁, S₂, S₃, S₄ und S₅ dargestellt ist und in denen aufeinanderfolgende Bearbeitungsschritte an unmittelbar in einer Reihe nebeneinander in Querlage zu dem Blechstreifen angeordneten Rohlingen, die während der Bearbeitung ihre Position innerhalb des Blechstreifens 20 beibehalten, nach und nach so vorgenommen werden, daß am Ende der Stationen, in Figur 4 hinter Station S₅, die fertige Schaltgabel 1 nach dem Trennschnitt in der Station S₅ entnommen werden kann.

Wesentliche aufeinanderfolgende Bearbeitungsschritte, denen die in den Blechstreifen 20 eingebundenen Rohlinge oder Zuschnitte der Schaltgabel unterworfen werden, sind insbesondere die folgenden, wobei die nachfolgend mit Buchstaben bezeichneten Bearbeitungsschritte auf Bereiche der Schaltgabel 1 in Fig. 3 Bezug nehmen, wo die Bearbeitungsbereiche mit den gleichen Buchstaben bezeichnet sind, wenn sie zu sehen sind:
- a -: Fängerlöcher 21 werden in Station S₁ ausgestanzt, die zur Positionierung des Blechstreifens 20 dienen,
- b -: Konturstanzen der Schaltgabelteile in Station S₂, ggfs. aufgeteilt in mehrere Konturstanzschritte,
- es folgt ein Leerschritt, weil der Raum für den folgenden Biegeschritt gebraucht wird -
- c₁,c₂ -: Abbiegen der Stufe 10 von dem Gabelrücken 2 und Pressen des Wulstes 12 in Station S₃,
- d₁,d₂ -: es folgen (ohne Darstellung der Stationen in Fig. 4) die Abwinkelungen der Gabelschenkel 3a, 3b mit anschließendem Nachformen durch Kalibrierung,
- f₁,f₂ -: Abbiegen des die Stufe 10 bildenden Abschnitts vom Gabelrücken 2 und Abbiegen des Zwischenabschnitts 9 vom Gabelrücken 2, vgl. Station S4,
- g -: Vornahme von Messungen,
- h -: Vornahme von Nachkalibrierungen zwecks Herstellung genauer Funktions- maße,
- i₁,i₂, - i₃, i₄: Herstellen der zwei Aufnahmebohrungen 13a, 13b und der zwei Lagerbohrun- gen 5a,5b, die anschließend in Station S₄ kalibriert werden,
- j -: rechts und links von dem Gabelrücken 2 werden in Station S₅ Ausstanzungen für den Trennschnitt hergestellt, so daß die Schaltgabel nun entnommen werden kann.

Nach der Härtung des Kopfes 6 vorzugsweise durch induktives Härten ist die Schaltgabel 1 vollends fertig hergestellt, und es können die Segmente 7a, 7b in die Aufnahmebohrungen 13a, 13b eingesetzt und mit den Sicherungsringen 8a, 8b gesichert werden.

Es versteht sich von selbst, daß die angegebene Folge der Bearbeitungsschritte ein vorzugsweise aber nicht zwingend angewendetes Herstellungsverfahren für die Schaltgabel ist. Der verwendete Stahlblechstreifen 20 hat in dem vorliegenden Ausführungsbeispiel eine Breite von 302 mm, eine Dicke von 6 mm, und die Güte des Stahlblechs entspricht C ₃₅.

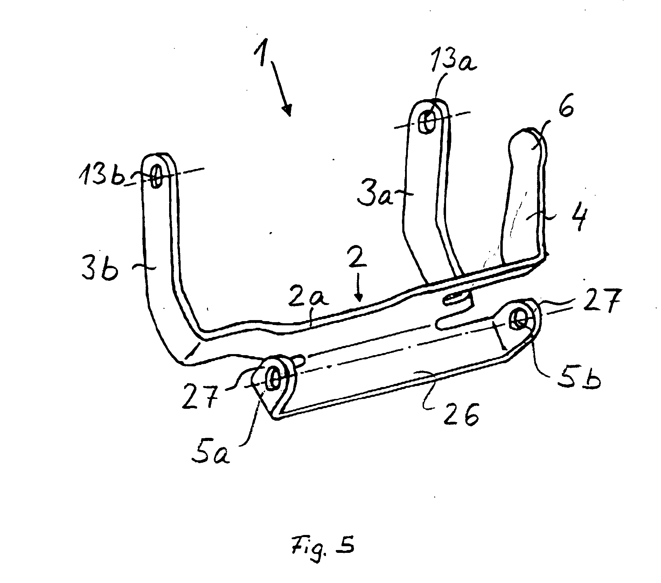

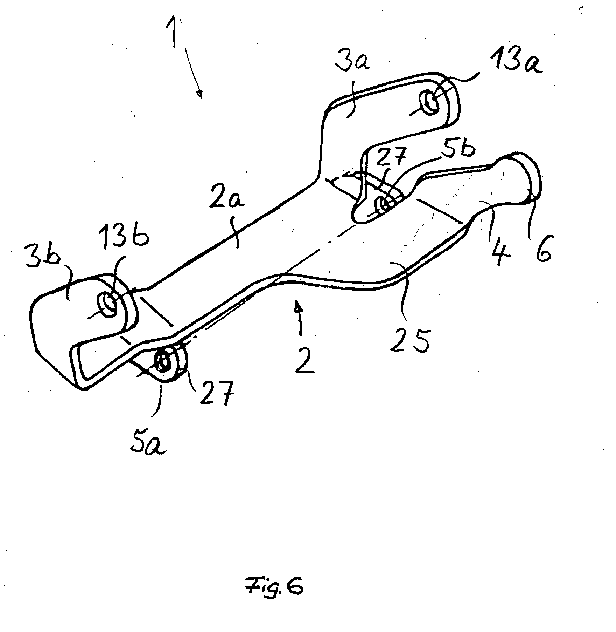

Auch die zweite bevorzugte Ausführungsform einer Schaltgabel 1 gemäß Fig. 5 und 6 zeichnet sich dadurch aus, daß die Schaltgabel 1 einteilig aus Stahlblech hergestellt ist, und zwar einschließlich des Gabelrückens 2, der beiden Gabelschenkel 3a, 3b, der Lagerbohrungen 5a, 5b für die Schwenklageraufnahme und des Betätigungshebels 4. Wie die Zeichnung zeigt, ergeben sich in der Gestaltung dieses zweiten Ausführungsbeispiels wesentliche Übereinstimmungen mit dem ersten Ausführungsbeispiel gemäß Fig. 2 und 3. Allerdings ist bei dem zweiten Ausführungsbeispiel der Abschnitt im Bereich des Gabelrückens 2, wo sich die Lagerbohrungen 5a, 5b befinden und ebenso der von dem Gabelrücken 2 ausgehende Bereich, von dem der Betätigungshebel 4 abgewinkelt ist, unterschiedlich zu dem ersten Ausführungsbeispiel ausgebildet.

Vor der Stelle des Gabelrückens 2, wo der Gabelschenkel 3a abgewinkelt ist, erstreckt sich, wie insbesondere aus Fig. 6 zu sehen ist, ein Arm 25, der sich über die Ebene des auf dieser

Seite gelegenen Gabelschenkels 3a hinauserstreckt und von dem der Betätigungshebel 4 abgewinkelt ist.

Wie insbesondere Fig. 5 zeigt, ist von dem sich zwischen den Gabelschenkeln 3a, 3b erstreckenden Kernabschnitt 2a des Gabelrückens 2 ein Abschnitt 26 abgewinkelt, der zwei freie Enden mit abgewinkelten Laschen 27 aufweist, in denen sich die Lagerbohrungen 5a, 5b für die Schwenklageraufnahme befinden.

Es versteht sich von selbst, daß auch das zweite bevorzugte Ausführungsbeispiel, wie es in Fig. 5 und 6 dargestellt ist, mit seinen wesentlichen Funktionsteilen, nämlich dem Gabelrücken 2, den Gabelschenkeln 3a, 3b, dem Betätigungshebel 4 und den Lagerbohrungen 5a,5b ebenso wie das erste bevorzugte Ausführungsbeispiel einteilig aus einem ebenen Blechabschnitt hergestellt ist und die vorgenannten Funktionsteile mittels Biegewerkzeugen etc. durch Kaltverformung in ihre vorbestimmte Position gebogen sind. Auch für das zweite Ausführungsbeispiel wird vorzugsweise Stahlblech der Güte C ₃₅ mit einer Dicke von vorzugsweise 6 mm verwendet.

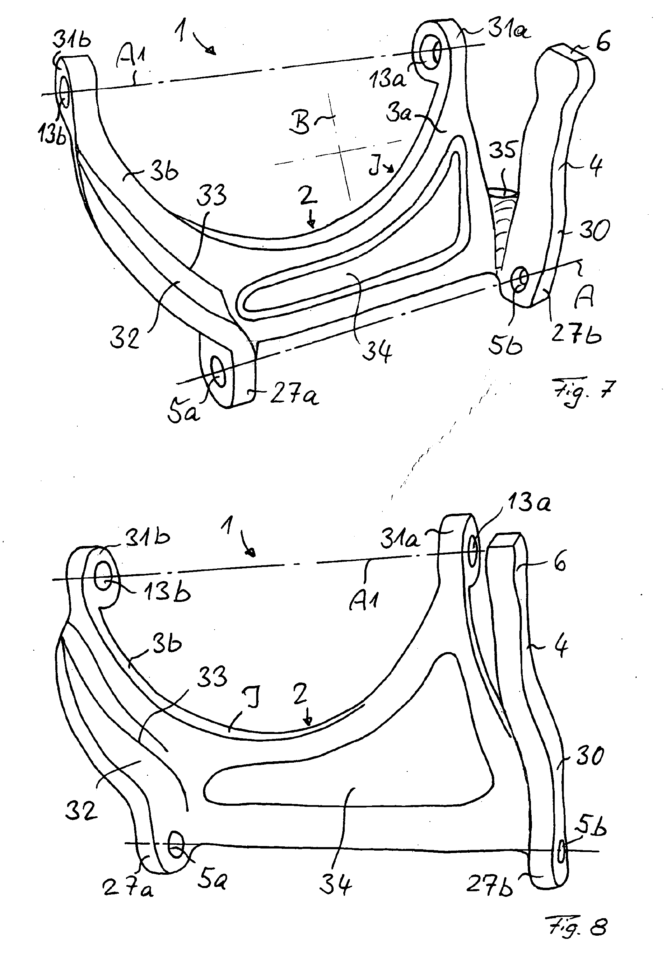

Die vorgenannten Angaben und Vorteile insbesondere einer einteiligen aus einem ebenen Stahlblechabschnitt biegeziehtechnisch hergestellten Schaltgabel gelten auch für das dritte in Fig. 7 - 9 dargestellte bevorzugte Ausführungsbeispiel. Wie schon eingangs in der Beschreibung erläutert wurde, weist diese Ausführungsform im Gegensatz zu den beiden anderen Ausführungsformen einen in der Blechebene B liegenden Gabelrücken 2 und ebenfalls im wesentlichen oder nahe an in dieser Ebene liegende Gabelschenkel 3a und 3b auf.

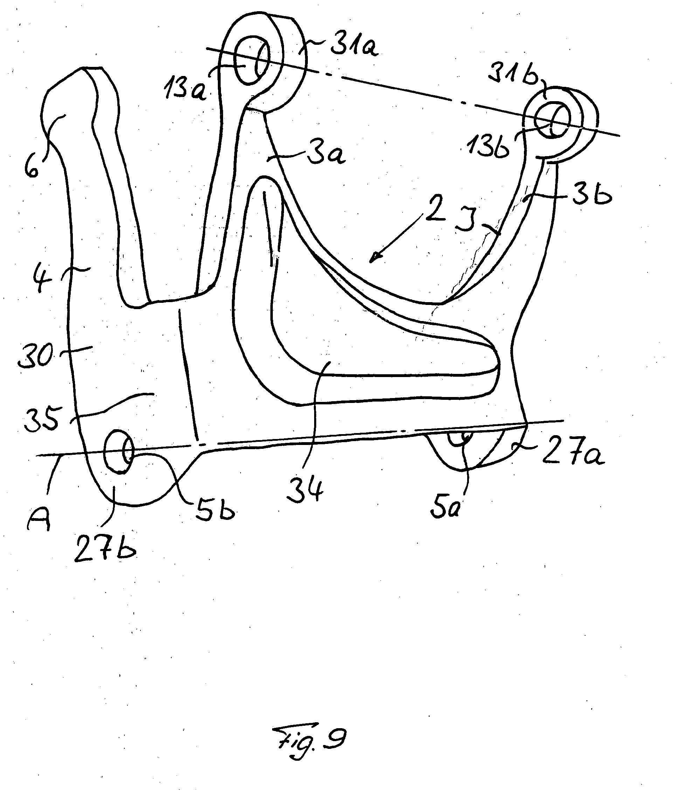

Wie die drei Ansichten eines Muster dieses Ausführungsbeispiels in Fig. 7 - 9 zeigen, verlaufen die Gabelschenkel 3a, 3b insbesondere auf der Innenseite I bogenförmig mit sehr breitem Ansatz von dem Gabelrücken 2 ausgehend. Der Gabelrücken 2 ist selbst durch eine Sicke 34 von der in der Zeichnung dargestellten Form verstärkt. Ebenfalls der Verstärkung dient eine Wange 32, die von dem von dem Betätigungshebel 4 entfernt liegenden Gabelschenkel 3b längs einer bogenförmigen Linie 33 abgewinkelt ist, wie Fig. 7 und Fig. 8 erkennen lassen.

Die freien Enden der Gabelschenkel 3a, 3b sind zu Ösen 31a, 31b aufgerollt bzw. gewickelt und durch Verschweißen geschlossen. In den Ösen 31a, 31b befinden sich die Aufnahmebohrungen 13a, 13b für die drehbare Lagerung der Segmente, die zum Eingriff in die Nut der Schaltmuffe bestimmt sind (nicht dargestellt). Die Achse A1 erstreckt sich durch beide Aufnahmebohrungen 13a, 13b.

Auf der Seite des Gabelschenkels 3a ist von dem Gabelrücken 2 in dessen unteren Bereich ein hoher stabiler Wandabschnitt 35 abgebogen. Dieser geht in einen Abschnitt 30 über, von dem aus sich der Betätigungshebel 4 mit dem Kopf 6 am oberen Ende ausgeht. Im unteren Teil schließt sich an den Wandabschnitt 35 unmittelbar ein Abschnitt 27b mit der Lagerbohrung 5b an.

Auf der anderen Seite der Schaltgabel 1 ist von der Wange 32 und ebenso von dem Gabelrücken 2 der Abschnitt 27a abgewinkelt, der dem Abschnitt 27b gegenüberliegt und die Lagerbohrung 5a aufweist, durch die sich die Achse A für die Schwenklagerung der Schaltgabel 1 hindurcherstreckt.

Fig. 9 verdeutlicht zum einen die Verstärkung des Gabelrückens 2 durch die Sicke 34 von der Rückseite her und ebenso die hohe Festigkeit der voneinander abgewinkelten Teile der Schaltgabel 1 dienenden Wandung 35 mit den angrenzenden Funktionsbereichen insgesamt.

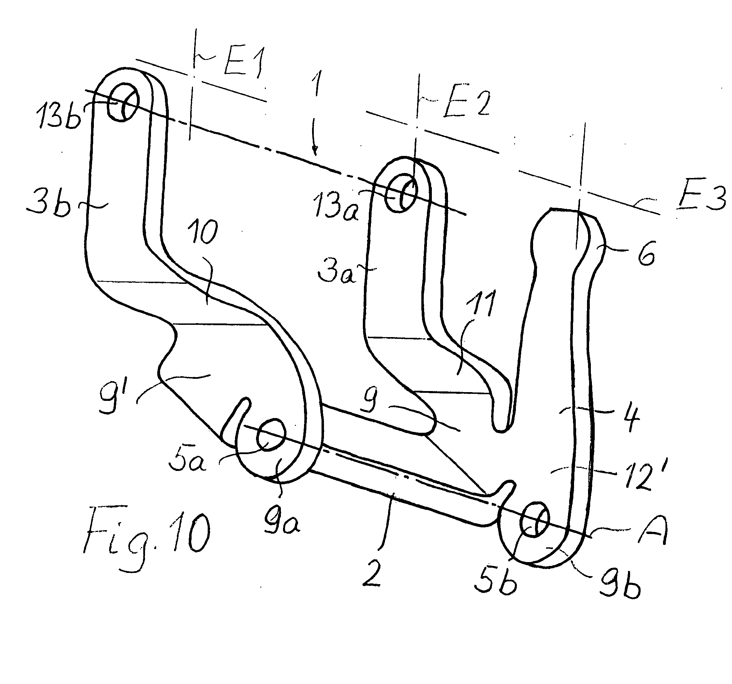

Das in Fig. 10 dargestellte vierte Ausführungsbeispiel einer Schaltgabel 1 ist eine Weiterentwicklung des ersten Ausführungsbeispiels gemäß Fig. 2 und 3. Deshalb stimmt auch der grundsätzliche Aufbau und die biegetechnische Fertigung der vierten Ausführungsform mit Aufbau und Fertigung der ersten bevorzugten Ausführungsform im wesentlichen überein. Gleiche oder im wesentlichen gleiche Teile der Schaltgabel 1 von Fig. 10 tragen deshalb die gleichen Bezugszeichen wie die Schaltgabel 1 gemäß Fig. 2 und 3. Gleichzeitig wird zur Vermeidung von Wiederholungen auf die Beschreibung der Schaltgabel 1 gemäß Fig. 2 und 3 Bezug genommen. Die Unterschiede der beiden Ausführungsformen sind deutlich erkennbar. Der Gabelrücken 2 geht an einer Seite ähnlich wie bei der bevorzugten ersten Ausführungsform in einen abgewinkelten Zwischenabschnitt 9 über, während von der anderen Seite des Gabelrückens 2 ein Abschnitt 9' abgewinkelt ist.

Der Betätigungshebel 4 schließt sich an einen Abschnitt 12', der neben dem Zwischenabschnitt 9 liegt, an und erstreckt sich wie bei der bevorzugten ersten Ausführungsform in der Ebene E₃, die im Wesentlichen parallel zu den Ebenen E₁, E₂ sowie im Abstand von der nächstgelegenen Ebene E₂ liegt.

Die abgewinkelten Stufen 10, 11 der Schaltgabel 1, von denen sich die Gabelschenkel 3a, 3b in den Ebenen E₁, E₂ nach oben erstrecken, sind einander ähnlich.

Von dem abgewinkelten Abschnitt 9' unterhalb der Stufe 10 erstreckt sich im Unterschied zur ersten bevorzugten Ausführungsform der Schaltgabel 1 eine Öse 9a etwa in Höhe des Gabelrückens 2 mit einer Lagerbohrung 5a. Dieser liegt in einer von dem Zwischenabschnitt 9 ausgehenden Hülse 9b, ebenfalls etwa in Höhe des Gabelrückens 2, eine zweite Lagerbohrung 5b gegenüber. Beide zusammen bilden die Schwenklageraufnahme für den nicht dargestellten Lagerzapfen, um dessen Achse A die Schaltgabel 1 eine Schwenkbewegung ausführen kann, wie bereits oben erläutert ist.

Die Funktionen der Schaltgabel 1 und ihrer Teile entsprechen der in Fig. 2 und 3 dargestellten und beschriebenen Schaltgabel 1 und ihren entsprechenden Teilen, die hinsichtlich ihrer Position und Ausbildung an der bevorzugten ersten Ausführungsform der Schaltgabel 1 in Fig. 2 und 3 ohne weiteres wiederzufinden sind. Der Übereinstimmungen wegen kann auf eine Wiederholung der Erläuterung der Funktionen der Schaltgabel 1 und ihrer Teile im Getriebe verzichtet werden.

Die vierte Ausführungsform der Schaltgabel 1 zeichnet sich gegenüber der ersten bevorzugten Ausführungsform unter Beibehaltung der Vorteile der biegetechnischen Herstellung aus einem einzigen Blechstreifen vor allem durch eine größere Festigkeit bzw. Steifigkeit im Bereich des Gabelrückens 2 und der angrenzenden Abwinkelungen, nämlich des Zwischenabschnitts 9 und des Abschnitts 9' aus, und zwar in Folge einer größeren Breite dieser Bereiche sowie durch eine Verlagerung der Lagerbohrungen 5a, 5b in gesonderte Ösen 9a, 9b für die Schwenkachse A.

## Patentansprüche

1. Schaltgabel für Getriebe, insbesondere Kfz-Getriebe,
- zum Verschieben einer zwischen Zahnrädern angeordneten und am Umfang mit einer Nut versehenen Schiebemuffe zum Wechseln von Getriebestufen,
- mit einem Gabelrücken,
- von dem zwei Gabelschenkel im Abstand voneinander ausgehen,
- mit einer Schwenklageraufnahme insbesondere für einen Lagerzapfen im Bereich des Gabelrückens für eine schwenkbare Lagerung der Schaltgabel im Getriebegehäuse und
- mit einem Betätigungshebel zum Betätigen der Schaltgabel, der sich von dem Bereich des Gabelrückens her neben einem der Gabelschenkel erstreckt,
**dadurch gekennzeichnet, daß**
die Schaltgabel (1), nämlich der Gabelrücken (2), die beiden Gabelschenkel (3a,3b), die Schwenklageraufnahme (Lagerbohrungen 5a,5b) und der Betätigungshebel (4) einteilig aus Stahlblech gebildet sind.

2. Schaltgabel nach Anspruch 1, **dadurch gekennzeichnet, daß** die beiden Gabelschenkel (3a,3b) und der Betätigungshebel (4) von dem Gabelrücken (2) abgebogene Teile bilden.

3. Schaltgabel nach Anspruch 1 oder 2, **dadurch gekennzeichnet, daß** die beiden Gabelschenkel (3a,3b) und der Betätigungshebel (4) in drei verschiedenen, sich senkrecht zur Schwenkachse (A) der Schaltgabel (1) erstreckenden Ebenen (E₁,E₂,E₃) verlaufen, die parallel und im Abstand zueinander angeordnet sind.

4. Schaltgabel nach einem oder mehreren der vorhergehenden Ansprüche, **dadurch gekennzeichnet, daß** die Schwenklageraufnahme (Lagerbohrungen 5a,5b) für den Lagerzapfen der Schaltgabel (1) aus zwei im Abstand voneinander angeordneten Lagerbohrungen (5a,5b) in von dem Gabelrücken (2) unmittelbar abgebogenen Bauteilen wie dem Zwischenabschnitt (9) oder dem abgewinkelten Abschnitt (9') oder in von solchen abgebogenen Bauteilen (2a) abgewinkelten Bauteilabschnitten wie abgewinkelten Laschen (27) oder Ösen (9a, 9b), die sich von dem Zwischenabschnitt (9) bzw. dem abgewinkelten Abschnitt (9') aus erstrecken.

5. Schaltgabel nach Anspruch 4, **dadurch gekennzeichnet, daß** die Lage der beiden Lagerbohrungen (5a,5b) gegenüber den Ebenen (E₁,E₂) der beiden Gabelschenkel (3a,3b) jeweils in die Richtung der Ebene (E₃) des Betätigungshebels (4) hin versetzt ist.

6. Schaltgabel nach einem oder mehreren der vorhergehenden Ansprüche, **dadurch gekennzeichnet, daß** die freien Enden der Gabelschenkel (3a,3b) jeweils Aufnahmebohrungen (13a, 13b) für eine drehbare Lagerung von Segmenten (7a,7b) aufweisen, die zum Eingriff in die Nut der Schaltmuffe bestimmt sind.

7. Schaltgabel nach einem oder mehreren der vorhergehenden Ansprüche, **dadurch gekennzeichnet, daß** der Gabelrücken (2) aus einem länglichen Blechabschnitt besteht, von dessen Endbereichen die Gabelschenkel (3a,3b) und der Betätigungshebel (4) unmittelbar oder mittelbar (z.B. über einen Zwischenabschnitt 9) abgewinkelt sind.

8. Schaltgabel nach einem oder mehreren der vorhergehenden Ansprüche, **dadurch gekennzeichnet, daß** sich der Zwischenabschnitt (9) - ausgehend von dem Gabelrücken (2) - zu dem Gabelschenkel (3a) und dem Betätigungshebel (4) hin erweitert.

9. Schaltgabel nach Anspruch 8, **dadurch gekennzeichnet, daß** zwischen dem Zwischenabschnitt (9) und dem im wesentlichen geraden freien Gabelschenkel (3a) eine zweifache Abwinkelung (11) liegt, so daß die Ebene (E₂) dieses Gabelschenkels (3a) gegenüber der Ebene (E₃) des Zwischenabschnitts (9) in Richtung auf den anderen Gabelschenkel (3b) hin versetzt ist.

10. Schaltgabel nach einem oder mehreren der vorhergehenden Ansprüche, **dadurch gekennzeichnet, daß** sich die Lagerbohrungen (5a,5b) für den Lagerzapfen unmittelbar in dem Zwischenabschnitt (9) bzw. in einem Abschnitt der abgewinkelten Stufe (10) befinden.

11. Schaltgabel nach einem oder mehreren der vorhergehenden Ansprüche, **dadurch gekennzeichnet, daß** sich an den Gabelrücken (2) auf der Seite des Betätigungshebels (4) ein Arm (25) anschließt, der sich über die Ebene des auf dieser Seite gelegenen Gabelschenkels (3a) hinauserstreckt und von dem der Betätigungshebel (4) abgewinkelt ist.

12. Schaltgabel nach einem oder mehreren der vorhergehenden Ansprüche, **dadurch gekennzeichnet, daß** von dem sich zwischen den Gabelschenkeln (3a,3b) erstreckenden Kernabschnitt (2a) des Gabelrückens (2) ein Abschnitt (26) ausgeht, an dem im Bereich seiner Enden die Lagerbohrungen (5a,5b) ausgebildet sind.

13. Schaltgabel nach einem oder mehreren der vorhergehenden Ansprüche, **dadurch gekennzeichnet, daß** der abgewinkelte Abschnitt (26) an beiden freien Enden abgewinkelte Laschen (27) aufweist, in denen sich die Lagerbohrungen (5a,5b) befinden.

14. Schaltgabel nach einem oder mehreren der vorhergehenden Ansprüche, **dadurch gekennzeichnet, daß** die einteilige Schaltgabel (1) mit ihren wesentlichen Funktionsteilen, nämlich dem Gabelrücken (2), den Gabelschenkeln (3a,3b), dem Betätigungshebel (4) und den Lagerbohrungen (5a,5b), als Konturstanzteil aus einem länglichen sowie ebenen Blechabschnitt hergestellt und die vorgenannten Funktionsteile mittels Biegewerkzeugen in ihre vorbestimmte Position gebogen sind.

15. Schaltgabel nach einem oder mehreren der vorhergehenden Ansprüche, **dadurch gekennzeichnet, daß** sich der Gabelrücken (2) und die beiden hiervon ausgehenden Gabelschenkel (3a, 3b) im wesentlichen in der Blechebene (B) erstrecken (Fig. 7 - 9).

16. Schaltgabel nach Anspruch 15, **dadurch gekennzeichnet, daß** sich die Lagerbohrungen (5a, 5b) in von dem Gabelrücken (2) abgewinkelten Abschnitten (27a, 27b) erstrecken (Fig. 7 - 9).

17. Schaltgabel nach Anspruch 15 oder 16, **dadurch gekennzeichnet, daß** die freien Enden der Gabelschenkel (3a, 3b) zur Bildung von Aufnahmebohrungen (13a, 13b) für eine drehbare Lagerung von Segmenten gewickelt bzw. eingerollt sind (Fig. 7 - 9).

18. Schaltgabel nach einem der Ansprüche 15 - 17, **dadurch gekennzeichnet, daß** die beiden Gabelschenkel (3a, 3b) an der Innenseite (I) vom Gabelrücken (2) her jeweils bogenförmig ansteigen (Fig. 7 - 9).

19. Schaltgabel nach einem der Ansprüche 15 - 18, **dadurch gekennzeichnet, daß** der von dem Betätigungshebel (4) entfernt liegende Gabelschenkel (3b) eine abgewinkelte Wange (32) aufweist, die längs der Abwinkelungskante (33) etwa bogenförmig verlaufen kann (Fig. 7, 8).

20. Schaltgabel nach einem der Ansprüche 15 - 19, **dadurch gekennzeichnet, daß** der Gabelrücken (2) durch eine Sicke (34) verstärkt ist (Fig. 7 - 9).

21. Schaltgabel nach Anspruch 20, **dadurch gekennzeichnet, daß** sich die Sicke (34) bis in den Ansatzbereich des nahe an dem Betätigungshebel (4) gelegenen Gabelschenkels (3a) erstreckt (Fig. 7 - 9).

22. Verfahren zum Herstellen einer Schaltgabel für Getriebe, insbesondere Kfz-Getriebe,
- zum Verschieben einer zwischen Zahnrädern angeordneten und am Umfang mit einer Nut versehenen Schiebemuffe zum Wechseln von Getriebestufen,
- mit einem Gabelrücken,
- von dem zwei Gabelschenkel im Abstand voneinander ausgehen,
- mit einer Schwenklageraufnahme insbesondere für einen Lagerzapfen im Bereich des Gabelrückens für eine schwenkbare Lagerung der Schaltgabel im Getriebegehäuse und
- mit einem Betätigungshebel zum Betätigen der Schaltgabel, der sich von dem Bereich des Gabelrückens her neben einem der Gabelschenkel erstreckt,
**dadurch gekennzeichnet, daß**
- die Schaltgabel, nämlich der Gabelrücken, die beiden Gabelschenkel, die Schwenklageraufnahme und der Betätigungshebel einteilig aus Stahlblech hergestellt werden.

23. Verfahren nach Anspruch 22, **dadurch gekennzeichnet, daß**
- ein Blechstreifen, vorzugsweise von einem Coil, schrittweise einer Stanz- und Umformeinrichtung zu- und durch diese hindurchgeführt wird und
- entsprechend schrittweise Stationen in der Stanz- und Umformeinrichtung durchläuft,
- in denen im wesentlichen zur gleichen Zeit aufeinanderfolgende - je nach Art der Bearbeitung jedoch teilweise auch gleichzeitig erfolgende Bearbeitungsschritte insbesondere Stanzen, Biegen und Pressen vorgenommen werden.

24. Verfahren nach Anspruch 23, **dadurch gekennzeichnet, daß** die Konturstanzbearbeitung in einer oder in mehreren der ersten Stationen zunächst auf das Ausstanzen der wesentlichen Teile der Schaltgabel, nämlich der Gabelschenkel und des Betätigungshebels sowie der Endabschnitte des Gabelrückens, beschränkt bleibt und das Ausstanzen des Mittelabschnitts des Gabelrückens als Trennschritt, mit dem die Schaltgabel aus dem Blechstreifen gelöst wird, erst in einer Endstation erfolgt.

25. Verfahren nach einem oder mehreren der Ansprüche 22 - 24, **dadurch gekennzeichnet, daß** eine schrittweise Bearbeitung des einem Folgeverbundwerkzeug als Stanz-, Bohr-, Biege- und Preßeinrichtung zugeführten Blechstreifens in hintereinander angeordneten Stationen vor allem folgende Bearbeitungsschritte umfaßt:
- Konturstanzen der Endabschnitte des Gabelrückens, der Gabelschenkel, des Betätigungsarms und der Teile für Lagerbohrungen sowie etwaiger Zwischen- und sonstiger Abschnitte oder späteren Stufen in einer oder in mehreren Bearbeitungsstationen
- Biegen von Stufen der Gabelschenkel und eines Wulstes des Betätigungshebels
- 90°-Abbiegen der Gabelschenkel und des Betätigungshebels einschließlich der Stufen unter Bilden eines Zwischenabschnitts
- Herstellen der Lagerbohrungen und der Aufnahembohrungen
- Durchführen des Trennschnitts durch Ausstanzen des Mittelabschnitts des Rükkens.
